# EUROPEAN PATENT APPLICATION

(11) **EP 4 761 411 A1**
(43) Date of publication of application: **17.06.2026**
(21) Application number: 24858381.7
(22) Date of filing: 20.08.2024
(51) Int. Cl.: H04W 72/0446

(54) **COMMUNICATION METHOD AND APPARATUS**

(30) Priority: 31.08.2023 CN 202311127156
(71) Applicant: HUAWEI TECHNOLOGIES CO., LTD., Shenzhen 518129 (CN)
(72) Inventor: ZHANG, Yi, Shenzhen, Guangdong 518129 (CN); QI, Hong, Shenzhen, Guangdong 518129 (CN); YI, Feng, Shenzhen, Guangdong 518129 (CN); SU, Hongjia, Shenzhen, Guangdong 518129 (CN)
(74) Representative: Körber, Martin Hans
(86) International application number: PCT/CN2024/113372
(87) International publication number: WO 2025/044838

(57) **Abstract**

This application provides a communication method and a communication apparatus, and is applicable to fields such as V2X, internet of vehicles, autonomous driving, and assisted driving. The method may include: A first terminal device receives first control signaling from a network device, where the first control signaling indicates a first resource; and the first terminal device sends first data to a second terminal device and the network device on the first resource. According to the method described in this application, time-frequency resources can be saved.

## Description

### TECHNICAL FIELD

This application relates to the field of communication technologies, and in particular, to a communication method and apparatus.

### BACKGROUND

The 3rd generation partnership project (3rd generation partnership project, 3GPP for short) standard organization officially released a first-generation long term evolution (long term evolution, LTE) sidelink (sidelink, SL for short) standard at the beginning of 2017. The LTE SL addresses some basic requirements in vehicle-to-everything (vehicle-to-everything, V2X) communication scenarios. With development of a new radio (new radio, NR) technology in the 3GPP standard organization, NR SL is further developed.

When a transmit end user equipment (user equipment, UE) needs to send data to a receive end UE, one manner is for a base station sends control signaling to the transmit end UE, to indicate a resource that can be used by the transmit end UE to send the SL data. Further, the transmit end UE sends control information to the receive end UE, to indicate a specific resource used to send the SL data. The receive end UE receives the SL data based on the control information sent by the transmit end UE. When a hybrid automatic repeat request (hybrid automatic repeat request, HARQ) is supported, the receive end UE sends feedback information of the SL data to the transmit end UE, and the transmit end UE sends the feedback information of the SL data to the base station. However, the NR SL faces a problem of a shortage of time-frequency resources, and this scheduling manner has high resource overheads.

### SUMMARY

Embodiments of this application provide a communication method and apparatus, to save time-frequency resources.

According to a first aspect, this application provides a communication method. Optionally, the method may be performed by a first terminal device, an apparatus (for example, a processor, a chip, or a chip system) in a first terminal device, or a logical module or software that can implement all or some functions of a first terminal device. When the logical module or software implements some functions, different steps may be performed by different entities. The following uses the first terminal device as an execution body for description.

In a first implementation of the communication method provided in the first aspect, the method may include:
The first terminal device receives first control signaling from a network device, where the first control signaling indicates a first resource; and the first terminal device sends first data to a second terminal device and the network device on the first resource.

According to the method, the first data sent by the first terminal device may be received by the network device and the second terminal device, and the first data may be decoded. Both the receive ends can obtain the first data. In comparison with receiving the first data by one receive end, one more piece of data may be used as a backup, thereby improving data transmission reliability. In addition, the method does not increase occupation of time-frequency resources, and therefore saves time-frequency resources.

In an optional manner, the first control signaling indicates the first terminal device to send the first data on the first resource, and indicates the second terminal device to receive the first data on the first resource.

According to the method, the first signaling sent by the network device may be received by the first terminal device and the second terminal device, and then decoded. Therefore, both the first terminal device and the second terminal device may obtain control information in the first terminal device, to send and receive data or send feedback information based on the control information. In this way, the network device can complete related scheduling on the first terminal device and the second terminal device by sending one piece of control signaling, thereby saving signaling resources.

In an optional manner, the first control signaling further indicates a second resource, where the second resource is used to carry feedback information of the first data, or the second resource is used to carry feedback information of the first data and feedback information of second data, and the second data is data sent by the network device to the second terminal device.

According to the method, the second terminal device may directly send the feedback information of the first data to the network device, without sending the feedback information of the first data to the first terminal device and then sending the feedback information of the first data to the network device by the first terminal device. Therefore, time-frequency resources are saved.

In an optional manner, the second resource is used by the second terminal device to send the feedback information of the first data and/or the feedback information of the second data to the network device. In other words, the feedback information of the first data is sent by the second terminal device to the network device.

In an optional manner, the first data includes first information, and the first information indicates that a target receive end of the first data is the second terminal device and/or the network device.

In an optional manner, the first control signaling further indicates second information, and the second information indicates that a target receive end of the first data is the second terminal device and/or the network device.

In an optional manner, if the second terminal device is the target receive end of the first data, the first terminal device receives the feedback information of the first data from the second terminal device.

In a second implementation of the communication method provided in the first aspect, the method may include:
The first terminal device receives first control signaling from a network device, where the first control signaling indicates a first resource, and the first control signaling indicates the first terminal device to send first data on the first resource, and indicates a second terminal device to receive the first data on the first resource; and the first terminal device sends the first data to the second terminal device on the first resource.

According to the method, the first signaling sent by the network device may be received by the first terminal device and the second terminal device, and then decoded. Therefore, both the first terminal device and the second terminal device may obtain control information in the first terminal device, to send and receive data or send feedback information based on the control information. In this way, the network device can complete related scheduling on the first terminal device and the second terminal device by sending one piece of control signaling, thereby saving signaling resources.

In an optional manner, the first control signaling further indicates a second resource, where the second resource is used to carry feedback information of the first data, or the second resource is used to carry feedback information of the first data and feedback information of second data, and the second data is data sent by the network device to the second terminal device.

According to the method, the second terminal device may directly send the feedback information of the first data to the network device, without sending the feedback information of the first data to the first terminal device and then sending the feedback information of the first data to the network device by the first terminal device. Therefore, time-frequency resources are saved.

In an optional manner, the second resource is used by the second terminal device to send the feedback information of the first data and/or the feedback information of the second data to the network device. In other words, the feedback information of the first data is sent by the second terminal device to the network device.

In a third implementation of the communication method provided in the first aspect, the method may include:
The first terminal device receives first control signaling from a network device, where the first control signaling indicates a first resource; and the first terminal device sends first data and indicates a second resource to a second terminal device on the first resource, where the second resource is used to carry feedback information of the first data, or the second resource is used to carry feedback information of the first data and feedback information of second data, and the second data is data sent by the network device to the second terminal device.

According to the method, the second terminal device may directly send the feedback information of the first data to the network device, without sending the feedback information of the first data to the first terminal device and then sending the feedback information of the first data to the network device by the first terminal device. Therefore, time-frequency resources are saved.

In an optional manner, the second resource is used by the second terminal device to send the feedback information of the first data and/or the feedback information of the second data to the network device. In other words, the feedback information of the first data is sent by the second terminal device to the network device.

With reference to the three implementations and the various optional manners of the communication method provided in the first aspect,
in an optional manner, the first terminal device retransmits the first data to the second terminal device.

According to a second aspect, this application provides a communication method. Optionally, the method may be performed by a second terminal device, an apparatus (for example, a processor, a chip, or a chip system) in a second terminal device, or a logical module or software that can implement all or some functions of a second terminal device. When the logical module or software implements some functions, different steps may be performed by different entities. The following uses the second terminal device as an execution body for description.

In a first implementation of the communication method provided in the second aspect, the method may include:

The second terminal device receives first control signaling from a first terminal device or a network device, where the first control signaling indicates a first resource; and the second terminal device receives first data from the first terminal device on the first resource, where the first resource is used by the first terminal device to send the first data to the second terminal device and the network device.

In an optional manner, the second terminal device receives the first control signaling from the network device.

In an optional manner, the first control signaling indicates the first terminal device to send the first data on the first resource, and indicates the second terminal device to receive the first data on the first resource.

In an optional manner, the first control signaling further indicates a second resource, and the method further includes: The second terminal device sends feedback information of the first data to the network device on the second resource.

In an optional manner, the first control signaling further indicates a second resource, and the method further includes: The second terminal device receives second data from the network device; and the second terminal device sends feedback information of the first data and feedback information of the second data to the network device on the second resource.

In an optional manner, the method further includes: The second terminal device receives second control signaling from the network device, where the second control signaling indicates a second resource; the second terminal device receives second data from the network device; and the second terminal device sends feedback information of the first data or feedback information of the first data and feedback information of the second data to the network device on the second resource.

In an optional manner, the first data includes first information, and the first information indicates that a target receive end of the first data is the second terminal device and/or the network device.

In an optional manner, the first control signaling further indicates second information, and the second information indicates that a target receive end of the first data is the second terminal device and/or the network device.

In an optional manner, if the second terminal device is the target receive end of the first data, the second terminal device sends the feedback information of the first data to the network device or the first terminal device.

In a second implementation of the communication method provided in the second aspect, the method may include:
The second terminal device receives first control signaling from a network device, where the first control signaling indicates a first resource; and the second terminal device receives first data from a first terminal device on the first resource.

In an optional manner, the first control signaling indicates the first terminal device to send the first data on the first resource, and indicates the second terminal device to receive the first data on the first resource.

In an optional manner, the first control signaling further indicates a second resource, and the method further includes: The second terminal device sends feedback information of the first data to the network device on the second resource.

In an optional manner, the first control signaling further indicates a second resource, and the method further includes: The second terminal device receives second data from the network device; and the second terminal device sends feedback information of the first data and feedback information of the second data to the network device on the second resource.

In an optional manner, the method further includes: The second terminal device receives second control signaling from the network device, where the second control signaling indicates a second resource; the second terminal device receives second data from the network device; and the second terminal device sends feedback information of the first data or feedback information of the first data and feedback information of the second data to the network device on the second resource.

In a third implementation of the communication method provided in the second aspect, the method may include:
The second terminal device receives first data from a first terminal device on a first resource; and the second terminal device sends feedback information of the first data or feedback information of the first data and feedback information of second data to a network device on the second resource, and the second data is data sent by the network device to the second terminal device.

In an optional manner, first control signaling is received from the first terminal device, where the first control signaling indicates the second resource.

In an optional manner, the second resource is indicated by the network device to the first terminal device by using third control signaling.

In an optional manner, second control signaling is received from the network device, where the second control signaling indicates the second resource.

In an optional manner, the second terminal device receives the second data from the network device.

With reference to the three implementations and the various optional manners of the communication method provided in the second aspect,
in an optional manner, the second data is scheduled by using the second control signaling.

In an optional manner, the second terminal device receives the first data retransmitted by the network device, or receives the first data retransmitted by the first terminal device.

According to a third aspect, this application provides a communication method. Optionally, the method may be performed by a network device, an apparatus (for example, a processor, a chip, or a chip system) of a network device, or a logical module or software that can implement all or some functions of a network device. When the logical module or software implements some functions, different steps may be performed by different entities. The following uses the network device as an execution body for description.

In a first implementation of the communication method provided in the third aspect, the method may include:
The network device sends first control signaling to a first terminal device, where the first control signaling indicates a first resource, and the first resource is used by the first terminal device to send first data to a second terminal device and the network device; and the network device receives the first data from the first terminal device on the first resource.

The method is used.

In an optional manner, the network device further sends the first control signaling to the second terminal device.

In an optional manner, the first control signaling indicates the first terminal device to send the first data on the first resource, and indicates the second terminal device to receive the first data on the first resource.

In an optional manner, the first control signaling further indicates a second resource, and the method further includes: The network device receives feedback information of the first data from the second terminal device on the second resource.

In an optional manner, the first control signaling further indicates a second resource, and the method further includes: The network device sends second data to the second terminal device; and the network device receives feedback information of the first data and feedback information of the second data from the second terminal device on the second resource.

In an optional manner, the method further includes: The network device sends second control signaling to the second terminal device, where the second control signaling indicates a second resource; the network device sends second data to the second terminal device; and the network device receives feedback information of the first data or feedback information of the first data and feedback information of the second data from the second terminal device on the second resource.

In an optional manner, the first data includes first information, and the first information indicates that a target receive end of the first data is the second terminal device and/or the network device.

In an optional manner, the first control signaling further indicates second information, and the second information indicates that a target receive end of the first data is the second terminal device and/or the network device.

In an optional manner, if the second terminal device is the target receive end of the first data, the network device receives the feedback information of the first data from the second terminal device.

In a second implementation of the communication method provided in the third aspect, the method may include:
The network device sends first control signaling to a first terminal device and a second terminal device, where the first control signaling indicates a first resource, and the first control signaling indicates the first terminal device to send first data on the first resource, and indicates the second terminal device to receive the first data on the first resource.

In an optional manner, the network device determines or generates the first control signaling.

In an optional manner, the first control signaling further indicates a second resource, and the method further includes: The network device receives feedback information of the first data from the second terminal device on the second resource.

In an optional manner, the first control signaling further indicates a second resource, and the method further includes: The network device sends second data to the second terminal device; and the network device receives feedback information of the first data and feedback information of the second data from the second terminal device on the second resource.

In an optional manner, the method further includes: The network device sends second control signaling to the second terminal device, where the second control signaling indicates a second resource; the network device sends second data to the second terminal device; and the network device receives feedback information of the first data or feedback information of the first data and feedback information of the second data from the second terminal device on the second resource.

In a third implementation of the communication method provided in the third aspect, the method may include:
The network device sends first control signaling to a first terminal device, where the first control signaling indicates a first resource, and the first resource is used by the first terminal device to send first data to a second terminal device; and the network device receives feedback information of the first data or feedback information of the first data and feedback information of second data from the second terminal device on a second resource, and the second data is data sent by the network device to the second terminal device.

In an optional manner, the first control signaling further indicates the second resource.

In an optional manner, the second resource is indicated by the first terminal device to the second terminal device.

In an optional manner, second control signaling is sent to the second terminal device, where the second control signaling indicates the second resource.

In an optional manner, the network device sends the second data to the second terminal device.

With reference to the three implementations and the various optional manners of the communication method provided in the third aspect,
in an optional manner, the second data is scheduled by using the second control signaling.

In an optional manner, the network device retransmits the first data to the second terminal device, or the network device schedules the first terminal device to retransmit the first data to the second terminal device.

According to a fourth aspect, a communication apparatus is provided. The communication apparatus may perform the method provided in the first aspect.

In a first implementation of the communication apparatus provided in the fourth aspect, the communication apparatus may include:
a transceiver unit (the unit may alternatively be replaced with a module), configured to receive first control signaling from a network device, where the first control signaling indicates a first resource; and the transceiver unit is further configured to send first data to a second terminal device and the network device on the first resource.

In an optional manner, the first control signaling indicates a first terminal device to send the first data on the first resource, and indicates the second terminal device to receive the first data on the first resource.

In an optional manner, the first control signaling further indicates a second resource, where the second resource is used to carry feedback information of the first data, or the second resource is used to carry feedback information of the first data and feedback information of second data, and the second data is data sent by the network device to the second terminal device.

In an optional manner, the second resource is used by the second terminal device to send the feedback information of the first data and/or the feedback information of the second data to the network device. In other words, the feedback information of the first data is sent by the second terminal device to the network device.

In an optional manner, the first data includes first information, and the first information indicates that a target receive end of the first data is the second terminal device and/or the network device.

In an optional manner, the first control signaling further indicates second information, and the second information indicates that a target receive end of the first data is the second terminal device and/or the network device.

In an optional manner, if the second terminal device is the target receive end of the first data, the transceiver unit is further configured to receive the feedback information of the first data from the second terminal device.

In a second implementation of the communication apparatus provided in the fourth aspect, the communication apparatus may include:
a transceiver unit, configured to receive first control signaling from a network device, where the first control signaling indicates a first resource, the first control signaling indicates a first terminal device to send first data on the first resource, and indicates a second terminal device to receive the first data on the first resource; and the transceiver unit is further configured to send the first data to the second terminal device on the first resource.

In an optional manner, the first control signaling further indicates a second resource, where the second resource is used to carry feedback information of the first data, or the second resource is used to carry feedback information of the first data and feedback information of second data, and the second data is data sent by the network device to the second terminal device.

In an optional manner, the second resource is used by the second terminal device to send the feedback information of the first data and/or the feedback information of the second data to the network device. In other words, the feedback information of the first data is sent by the second terminal device to the network device.

In a third implementation of the communication apparatus provided in the fourth aspect, the communication apparatus may include:
a transceiver unit, configured to receive first control signaling from a network device, where the first control signaling indicates a first resource; and the transceiver unit is further configured to send first data and indicate a second resource to a second terminal device on the first resource, where the second resource is used to carry feedback information of the first data, or the second resource is used to carry feedback information of the first data and feedback information of second data, and the second data is data sent by the network device to the second terminal device.

In an optional manner, the second resource is used by the second terminal device to send the feedback information of the first data and/or the feedback information of the second data to the network device. In other words, the feedback information of the first data is sent by the second terminal device to the network device.

With reference to the three implementations and the various optional manners of the communication apparatus provided in the fourth aspect,
in an optional manner, the transceiver unit is further configured to retransmit the first data to the second terminal device.

According to a fifth aspect, a communication apparatus is provided. The communication apparatus may perform the method provided in the second aspect.

In a first implementation of the communication apparatus provided in the fifth aspect, the communication apparatus may include:
a transceiver unit, configured to receive first control signaling from a first terminal device or a network device, where the first control signaling indicates a first resource; and the transceiver unit is further configured to receive first data from the first terminal device on the first resource, where the first resource is used by the first terminal device to send the first data to a second terminal device and the network device.

In an optional manner, the transceiver unit is further configured to receive the first control signaling from the network device.

In an optional manner, the first control signaling indicates the first terminal device to send the first data on the first resource, and indicates the second terminal device to receive the first data on the first resource.

In an optional manner, the first control signaling further indicates a second resource; and the transceiver unit is further configured to send feedback information of the first data to the network device on the second resource.

In an optional manner, the first control signaling further indicates a second resource; the transceiver unit is further configured to receive second data from the network device; and the transceiver unit is further configured to send feedback information of the first data and feedback information of the second data to the network device on the second resource.

In an optional manner, the transceiver unit is further configured to receive second control signaling from the network device, where the second control signaling indicates a second resource; the transceiver unit is further configured to receive second data from the network device; and the transceiver unit is further configured to send feedback information of the first data or feedback information of the first data and feedback information of the second data to the network device on the second resource.

In an optional manner, the first data includes first information, and the first information indicates that a target receive end of the first data is the second terminal device and/or the network device.

In an optional manner, the first control signaling further indicates second information, and the second information indicates that a target receive end of the first data is the second terminal device and/or the network device.

In an optional manner, if the second terminal device is the target receive end of the first data, the transceiver unit is further configured to send the feedback information of the first data to the network device or the first terminal device.

In a second implementation of the communication apparatus provided in the fifth aspect, the communication apparatus may include:
a transceiver unit, configured to receive first control signaling from a network device, where the first control signaling indicates a first resource; and the transceiver unit is further configured to receive first data from a first terminal device on the first resource.

In an optional manner, the first control signaling indicates the first terminal device to send the first data on the first resource, and indicates a second terminal device to receive the first data on the first resource.

In an optional manner, the first control signaling further indicates a second resource; and the transceiver unit is further configured to send feedback information of the first data to the network device on the second resource.

In an optional manner, the first control signaling further indicates a second resource; the transceiver unit is further configured to receive second data from the network device; and the transceiver unit is further configured to send feedback information of the first data and feedback information of the second data to the network device on the second resource.

In an optional manner, the transceiver unit is further configured to receive second control signaling from the network device, where the second control signaling indicates a second resource; the transceiver unit is further configured to receive second data from the network device; and the transceiver unit is further configured to send feedback information of the first data or feedback information of the first data and feedback information of the second data to the network device on the second resource.

In a third implementation of the communication apparatus provided in the fifth aspect, the communication apparatus may include:
a transceiver unit, further configured to receive first data from a first terminal device on a first resource; and the transceiver unit is further configured to send feedback information of the first data or feedback information of the first data and feedback information of second data to a network device on a second resource, where the second data is data sent by the network device to a second terminal device.

In an optional manner, first control signaling is received from the first terminal device, where the first control signaling indicates the second resource.

In an optional manner, second control signaling is received from the network device, where the second control signaling indicates the second resource.

In an optional manner, the second resource is indicated by the network device to the second terminal device by using second control signaling.

In an optional manner, the transceiver unit is further configured to receive the second data from the network device.

With reference to the three implementations and the various optional manners of the communication apparatus provided in the fifth aspect,
in an optional manner, the second data is scheduled by using the second control signaling.

In an optional manner, the transceiver unit is further configured to receive the first data retransmitted by the network device, or receive the first data retransmitted by the first terminal device.

According to a sixth aspect, a communication apparatus is provided. The communication apparatus may perform the method provided in the third aspect.

In a first implementation of the communication apparatus provided in the sixth aspect, the communication apparatus may include:
a transceiver unit, configured to send first control signaling to a first terminal device, where the first control signaling indicates a first resource, and the first resource is used by the first terminal device to send first data to a second terminal device and a network device; and the transceiver unit is further configured to receive the first data from the first terminal device on the first resource.

In an optional manner, the transceiver unit is further configured to send the first control signaling to the second terminal device.

In an optional manner, the first control signaling indicates the first terminal device to send the first data on the first resource, and indicates the second terminal device to receive the first data on the first resource.

In an optional manner, the first control signaling further indicates a second resource; and the transceiver unit is further configured to receive feedback information of the first data from the second terminal device on the second resource.

In an optional manner, the first control signaling further indicates a second resource; the transceiver unit is further configured to send second data to the second terminal device; and the transceiver unit is further configured to receive feedback information of the first data and feedback information of the second data from the second terminal device on the second resource.

In an optional manner, the transceiver unit is further configured to send second control signaling to the second terminal device, where the second control signaling indicates a second resource; the transceiver unit is further configured to send second data to the second terminal device; and the transceiver unit is further configured to receive feedback information of the first data or feedback information of the first data and feedback information of the second data from the second terminal device on the second resource.

In an optional manner, the first data includes first information, and the first information indicates that a target receive end of the first data is the second terminal device and/or the network device.

In an optional manner, the first control signaling further indicates second information, and the second information indicates that a target receive end of the first data is the second terminal device and/or the network device.

In an optional manner, if the second terminal device is the target receive end of the first data, the transceiver unit is further configured to receive the feedback information of the first data from the second terminal device.

In a second implementation of the communication apparatus provided in the sixth aspect, the apparatus may include:
a transceiver unit, configured to send first control signaling to a first terminal device and a second terminal device, where the first control signaling indicates a first resource, and the first control signaling indicates the first terminal device to send first data on the first resource, and indicates the second terminal device to receive the first data on the first resource.

In an optional manner, the apparatus further includes a processing unit, configured to determine or generate the first control signaling.

In an optional manner, the first control signaling further indicates a second resource; and the transceiver unit is further configured to receive feedback information of the first data from the second terminal device on the second resource.

In an optional manner, the first control signaling further indicates a second resource; the transceiver unit is further configured to send second data to the second terminal device; and the transceiver unit is further configured to receive feedback information of the first data and feedback information of the second data from the second terminal device on the second resource.

In an optional manner, the transceiver unit is further configured to send second control signaling to the second terminal device, where the second control signaling indicates a second resource; the transceiver unit is further configured to send second data to the second terminal device; and the transceiver unit is further configured to receive feedback information of the first data or feedback information of the first data and feedback information of the second data from the second terminal device on the second resource.

In a third implementation of the communication apparatus provided in the sixth aspect, the communication apparatus may include:
a transceiver unit, configured to send first control signaling to a first terminal device, where the first control signaling indicates a first resource, and the first resource is used by the first terminal device to send first data to a second terminal device; and the transceiver unit is further configured to receive feedback information of the first data or feedback information of the first data and feedback information of second data from the second terminal device on a second resource, where the second data is data sent by a network device to the second terminal device.

In an optional manner, the first control signaling further indicates the second resource.

In an optional manner, the second resource is indicated by the first terminal device to the second terminal device.

In an optional manner, second control signaling is sent to the second terminal device, where the second control signaling indicates the second resource.

In an optional manner, the transceiver unit is further configured to send the second data to the second terminal device.

With reference to the three implementations and the various optional manners of the communication apparatus provided in the sixth aspect,
in an optional manner, the second data is scheduled by using the second control signaling.

In an optional manner, the transceiver unit is further configured to retransmit the first data to the second terminal device, or the transceiver unit is further configured to send scheduling information, where the scheduling information is used to schedule the first terminal device to retransmit the first data to the second terminal device.

According to a seventh aspect, this application provides a communication apparatus. The communication apparatus includes a processor, and the processor is configured to run a computer program or instructions, to cause the communication apparatus to perform the method according to the first aspect, the second aspect, or the third aspect.

In an optional manner, the communication apparatus further includes a memory. The processor is coupled to the memory, and the processor is configured to run a computer program or instructions stored in the memory, to cause the communication apparatus to perform the method according to the first aspect, the second aspect, or the third aspect.

According to an eighth aspect, this application provides a communication apparatus. The communication apparatus includes a processor, a memory, and a transceiver, the processor is coupled to the memory, the transceiver is configured to receive and send data, and the processor is configured to implement the method according to the first aspect, the second aspect, or the third aspect.

According to a ninth aspect, this application provides a chip. The chip includes a processor and an interface, the processor is coupled to the interface, the interface is configured to receive or output a signal, and the processor is configured to execute code instructions, so that the method according to the first aspect, the second aspect, or the third aspect is performed.

According to a tenth aspect, this application provides a computer-readable storage medium. The computer-readable storage medium stores a computer program or instructions, and when the computer program or the instructions are run on a communication apparatus, the method according to the first aspect, the second aspect, or the third aspect is performed.

According to an eleventh aspect, this application provides a communication system. The communication system includes a first communication apparatus and a second communication apparatus. The first communication apparatus is configured to perform the method according to the first aspect, and the second communication apparatus is configured to perform the method according to the second aspect.

In an optional manner, the communication system further includes a third communication apparatus, and the third communication apparatus is configured to perform the method according to the third aspect.

According to a twelfth aspect, this application provides a computer program product. The computer program product includes computer instructions, and when a part or all of the computer instructions are run on a communication apparatus, a computer is caused to perform the method according to the first aspect, the second aspect, or the third aspect.

For beneficial effects of the second aspect to the twelfth aspect and the possible designs of the second aspect to the twelfth aspect, refer to the beneficial effects of the first aspect and the possible designs of the first aspect.

### BRIEF DESCRIPTION OF DRAWINGS

FIG. 1 is a diagram of a structure of a possible radio access network according to an embodiment of this application;
FIG. 2 is a diagram of an application scenario of cellular communication and internet of vehicles according to an embodiment of this application;
FIG. 3 is a diagram of an application scenario of vehicle-to-everything communication according to an embodiment of this application;
FIG. 4 is a diagram of an application scenario of direct device communication according to an embodiment of this application;
FIG. 5 is a diagram of an application scenario of Wi-Fi communication according to an embodiment of this application;
FIG. 6 is a diagram of sidelink dynamic scheduling according to an embodiment of this application;
FIG. 7 is a diagram of Uu interface scheduling and SL scheduling according to an embodiment of this application;
FIG. 8 is a schematic flowchart of a communication method according to this application;
FIG. 9 is a diagram of a communication method according to this application;
FIG. 10 is a diagram of a structure of another communication apparatus according to this application;
FIG. 11 is a diagram of a structure of a communication apparatus according to this application; and
FIG. 12 is a diagram of a structure of a chip according to this application.

### DESCRIPTION OF EMBODIMENTS

Embodiments of this application provide a communication method and apparatus. The method and the apparatus have similar problem-resolving principles. Therefore, implementations of the apparatus and the method may be mutually referenced. Details are not described.

In descriptions of this application, terms such as "first" and "second" are merely used for distinction and description, and cannot be understood as an indication or implication of relative importance or an indication or implication of a sequence. It should be noted that an appearance sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

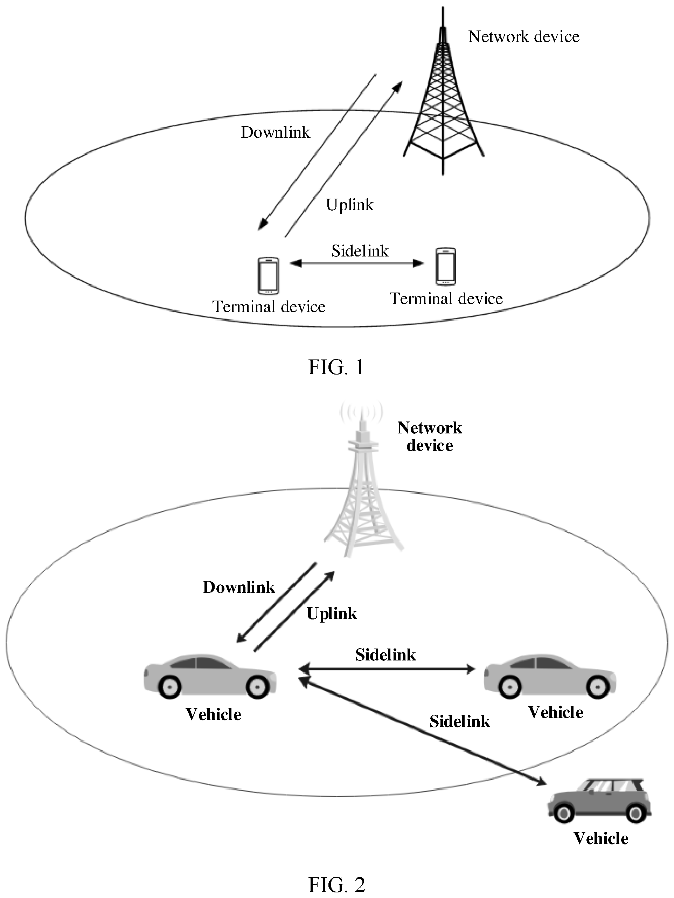

FIG. 1 to FIG. 5 are diagrams of direct communication (sidelink communication) between terminal devices, internet of vehicles, cellular communication (including 5G NR communication and LTE communication), or Wi-Fi communication. The terminal device may perform communication through a sidelink when there is no network coverage. Alternatively, the terminal device may be in a coverage area of a network device, and the terminal device in the coverage area may perform sidelink communication with a terminal device outside the coverage area. In terms of Uu (UTRAN-to-UE) air interface transmission, two parties of wireless communication include a network device and a terminal device. In terms of SL air interface transmission, a receive end and a transmit end of wireless communication are both terminal devices.

FIG. 1 is a diagram of a structure of a possible radio access network (radio access network, RAN) according to an embodiment of this application. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network of two or more of the foregoing networks.

The RAN includes one or more network devices. The network device may be any device having a wireless transceiver function, or a chip disposed in a device having a wireless transceiver function. The network device may also be referred to as a network apparatus or a RAN device. The network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system, a long range radio (long range radio, LoRa) system, or an internet of vehicles system. The RAN device may alternatively be a module or a unit that completes a part of functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The radio access network device may be a macro base station, may be a micro base station or an indoor base station, or may be a relay node, a donor node, or the like. The network device in this embodiment of this application may be any one of the foregoing devices or an apparatus in the foregoing devices, and a specific technology and a specific device form used by the network device are not limited in this embodiment of this application. For ease of description, the network device is used as an abbreviation of the radio access network device, and the base station is used as an example of the radio access network device.

The terminal device is also referred to as a user equipment (user equipment, UE), a mobile station (mobile station, MS), a mobile terminal (mobile terminal, MT), a terminal, a terminal apparatus, or the like, and is a device that provides voice and/or data connectivity for a user, or a chip disposed in the device, for example, a hand-held device or a vehicle-mounted device with a wireless connection function. Currently, some examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), and the like. For example, the terminal device may be a vehicle-mounted communication module or another embedded communication module, or may be a handheld communication device of a user, including a mobile phone, a tablet computer, or the like. Alternatively, the terminal device may be an entire vehicle. The terminal device in this embodiment of this application may be any one of the foregoing devices or an apparatus in the device, and a specific technology and a specific device form used by the terminal device are not limited in this embodiment of this application. For example, the terminal device in this embodiment of this application may be a V-UE (vehicle user UE). An apparatus in a first terminal device may be an on-board unit (on-board unit, OBU), a telematics box (telematics box, T-Box), or a road side unit (road side unit, RSU).

The terminal device provided in this embodiment of this application may be specifically the first terminal device or a second terminal device described in subsequent embodiments. For descriptions of types of the first terminal device and the second terminal device, refer to the foregoing content.

FIG. 2 is a diagram of an application scenario of cellular communication and internet of vehicles according to an embodiment of this application. A terminal device may be a vehicle, and a sidelink is configured between vehicles, or it is considered that the vehicles can directly communicate with each other.

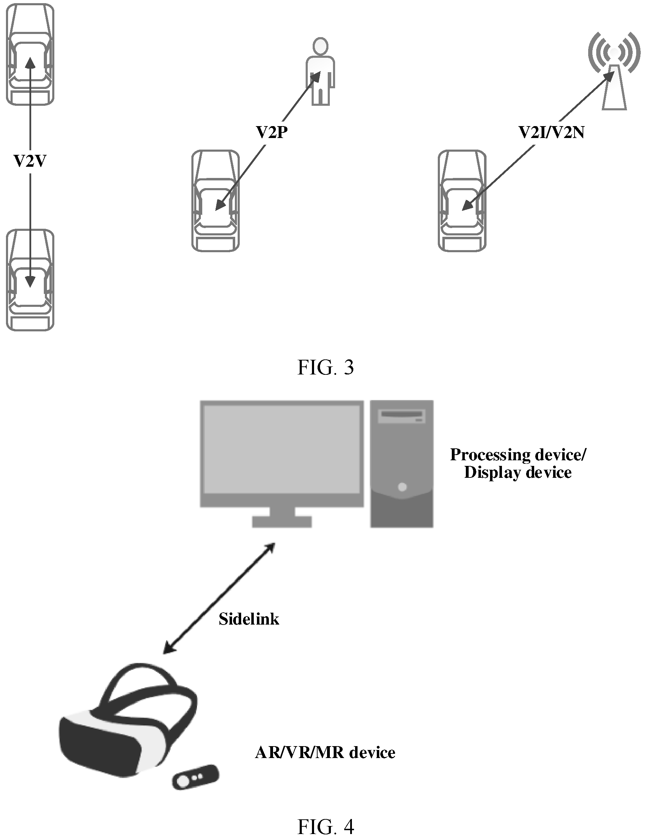

FIG. 3 is a diagram of an application scenario of vehicle-to-everything (vehicle-to-everything, V2X for short) communication according to an embodiment of this application. The V2X communication refers to communication between a vehicle and any object outside, including vehicle-to-vehicle (vehicle-to-vehicle, V2V for short) communication, vehicle-to-pedestrian (vehicle-to-pedestrian, V2P for short) communication, vehicle-to-infrastructure (vehicle-to-infrastructure, V2I for short) communication, and vehicle-to-network (vehicle-to-network, V2N for short) communication. Further, a vehicle-to-vehicle communication technology supported by V2X may be further applied to device-to-device (device-to-device, D2D for short) communication in any system.

FIG. 4 is a diagram of an application scenario of direct communication between terminal devices according to an embodiment of this application. A sidelink is configured between a processing device/display device and an AR/VR/MR device, or it is considered that the processing device/display device and the AR/VR/MR device may directly communicate with each other.

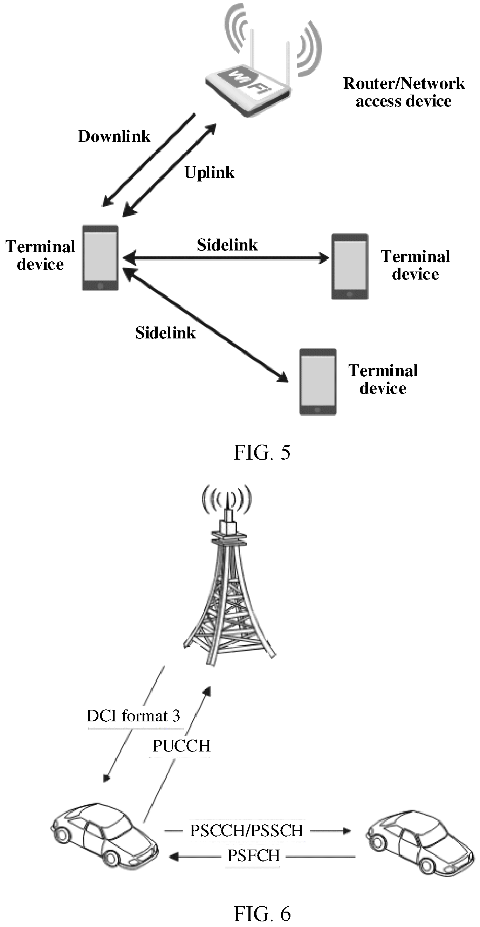

FIG. 5 is a diagram of an application scenario of Wi-Fi communication according to an embodiment of this application. A terminal device communicates with a router or a network access device through an uplink and a downlink. A sidelink is configured between the terminal device and another terminal device, or it is considered that the terminal device and the another terminal device can directly communicate with each other.

The following describes some terms in embodiments of this application, to facilitate understanding by a person skilled in the art.

### (1) V2X communication

The V2X communication is intended for high-speed devices represented by vehicles, and is a basic and key technology to be applied to scenarios in the future, for example, intelligent vehicles, autonomous driving, and intelligent transportation systems, with a quite high communication latency requirement. The V2X communication may support a communication scenario with network coverage and a communication scenario without network coverage, and a resource allocation manner in the V2X communication may be an access network device scheduling mode, for example, an eNB scheduling mode and a device self-selection mode. Based on the V2X technology, a vehicle user (vehicle UE, V-UE for short) can send, to a device nearby, some information about the vehicle user, for example, information such as a location, a speed, and an intention (turning, merging, or reversing), and information triggered by some periodic and aperiodic events, and the V-UE can also receive information from a user nearby in real time.

### (2) Sidelink (sidelink, SL)

The SL is mainly a link established between devices of a same type, and may also be understood as a sidelink, a secondary link, an auxiliary link, or the like. This is not limited in embodiments of this application. A name of a protocol interface used by the SL link is a PC5 interface. The link between devices of a same type may be a link between terminal devices, a link between base stations, a link between relay nodes, or the like. This is not limited in embodiments of this application. SL transmission is understood as data transmission between two V2X terminals on a sidelink.

Before performing SL transmission, the two V2X terminals may establish a sidelink connection. For example, the V2X terminal serving as an initiator sends, to a network side device, a request for establishing a sidelink connection. If the network side device allows the V2X terminal to establish the sidelink connection, the network side device sends, to the V2X terminal, configuration information for establishing the sidelink connection, and the V2X terminal establishes the sidelink connection to the other V2X terminal based on the configuration information sent by the network side device.

A 5G NR system is used as an example. A resource element (resource element, RE) is a minimum resource unit used for data transmission, and corresponds to one time domain symbol in time domain and one subcarrier in frequency domain. A physical resource block (physical resource block, PRB) is a basic unit used for resource scheduling, and corresponds to a plurality of consecutive time domain symbols in time domain and a plurality of consecutive subcarriers in frequency domain, or corresponds to a plurality of consecutive subcarriers in frequency domain.

### (3) SL scheduling

An SL communication mode 1 is used for SL communication within a coverage area of a base station. A resource allocation mode 1 includes three resource allocation modes: dynamic scheduling (Dynamic Grant), where scheduling is performed by using downlink control information (downlink control information, DCI) format 3 (format 3_0); a semi-persistent scheduling type 1 (Configured Grant Type 1), where semi-persistent configuration is performed through radio resource control (radio resource control, RRC); and a semi-persistent scheduling type 2 (Configured Grant Type 2), where after semi-persistent configuration is performed on resources through RRC, a specific resource is activated/deactivated by using DCI format 3_0.

The dynamic scheduling in the mode 1 is used as an example. The base station centrally allocates resources based on a buffer status report (Buffer Status Report, BSR) status of a UE. Specifically, as shown in FIG. 6, the base station sends DCI format 3 to indicate a sidelink resource and an uplink feedback resource, and a transmit end UE sends, based on an indication of the received DCI format 3, a physical sidelink control channel (Physical Sidelink Control Channel, PSCCH)/physical sidelink shared channel (Physical Sidelink Shared Channel, PSSCH) to a receive end UE on the sidelink resource, and receives sidelink feedback information sent by the receive end UE through a physical sidelink feedback channel (Physical Sidelink Feedback Channel, PSFCH). Correspondingly, the receive end UE receives the PSCCH/PSSCH, and sends the sidelink feedback information through the PSFCH. Finally, the transmit end UE sends a physical uplink control channel (physical uplink control channel, PUCCH) feedback on the uplink feedback resource indicated by the DCI format 3, and sends the sidelink feedback information received through the PSFCH to a network device. In the transmission mode 1, sidelink transmission resources of UEs are uniformly scheduled by the base station, so that collision can be avoided.

The DCI format 3 mainly includes information such as a resource pool indicator, a process number indicator, a new data indicator, a lowest index of subchannel allocation to initial transmission, a sidelink control information (sidelink control information, SCI) format 1-A field, a PSFCH-to-hybrid automatic repeat request (hybrid automatic repeat request, HARQ) feedback timing (PSFCH-to-HARQ feedback timing) indicator, and a PUCCH resource indicator, indicates information such as a time-frequency resource position and a transmission parameter for sidelink data transmission, and further includes a time-frequency resource (that is, a PUCCH) for data feedback.

### (4) Uu interface transmission

A name of an interface protocol for communication between the terminal device and the base station is a Uu interface.

Existing DCI includes DCI format 0, DCI format 1, DCI format 2, and DCI format 3. The DCI format 0 is used to schedule uplink data transmission through the Uu interface, that is, a physical uplink shared channel (physical uplink shared channel, PUSCH). The DCI format 1 is used to schedule downlink data transmission and corresponding feedback through the Uu interface, that is, a physical downlink shared channel (physical downlink shared channel, PDSCH) and a PUCCH. The DCI format 2 is used for scheduling for other purposes, such as unlicensed frequency band communication, power control, and ultra-reliable low-latency communication (ultra-reliable low-latency communication, URLLC). The DCI format 3 is used to schedule sidelink data transmission, that is, a PSSCH.

During uplink transmission, the base station sends the DCI format 0 to indicate an uplink resource, and after receiving the DCI format 0, the UE sends an uplink data PUSCH to the gNB based on indication information. The DCI format 0 mainly includes information such as a carrier/bandwidth part indicator, a scheduling resource position, a frequency hopping indicator, a modulation and coding scheme, a HARQ indicator, a channel sounding reference signal resource indicator, precoding information, an antenna port, a scheduling request indicator (scheduling request indicator, SRI), a channel state information (channel state information, CSI) request, code block group (code block group, CBG) transmission, and a waveform indicator, and indicates information such as a time-frequency resource position and a transmission parameter for uplink data transmission.

During downlink transmission, the base station sends the DCI format 1 to indicate a downlink resource and an uplink feedback resource, and the UE receives a PDSCH on the downlink resource based on an indication of the received DCI format 1, and sends a PUCCH feedback on the uplink feedback resource. The DCI format 1 mainly includes information such as a carrier/BWP indicator, a scheduling resource position, an MCS, a HARQ indicator, CSI-RS triggering, a PUCCH resource position, precoding information, an antenna port, and CBG transmission, indicates information such as a time-frequency resource position and a transmission parameter for downlink data transmission, and further includes a time-frequency resource (that is, a PUCCH) for data feedback.

### (5) Time domain resource

The time domain resource includes a time unit. The time unit may be one radio frame (radio frame), one subframe (subframe), one slot (slot), one mini-slot (mini-slot), or one orthogonal frequency division multiplexing (orthogonal frequency division multiplexing, OFDM) symbol (symbol), or may be a resource including a plurality of radio frames, a plurality of subframes, a plurality of slots, a plurality of mini-slots, or a plurality of OFDM symbols, or may be another time domain granularity (such as a system frame or a subframe). One radio frame may include a plurality of subframes, one subframe may include one or more slots, and one slot may include at least one symbol. It should be noted that, in embodiments of this application, one OFDM symbol may also be referred to as one symbol for short. For example, there are 14 symbols or 12 symbols. A transmission time interval (transmission time interval, TTI) is a time domain granularity used to carry data information or service information. For example, one data packet is carried on a time-frequency resource including one TTI in time domain and at least one physical resource block in frequency domain.

The time unit is any one of a slot, a subframe, a logical slot, or a logical subframe.

### (6) Transmission

Transmission may include sending or receiving. Transmission may also be understood as to be transmitted, or understood as being determined for transmission, or understood as being determined to be used for transmission. Similarly, sending may also be understood as to be sent, or understood as being determined for sending, or understood as being determined to be used for sending. Receiving may also be understood as to be received, or understood as being determined for receiving, or understood as being determined to be used for receiving.

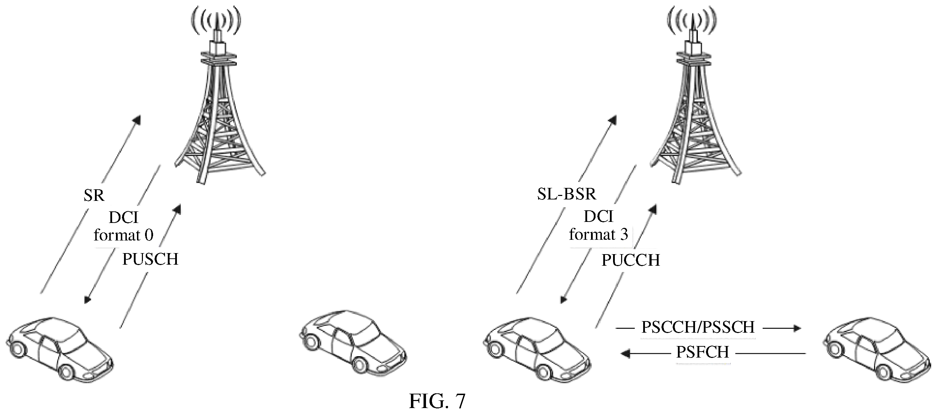

Currently, Uu interface uplink and downlink scheduling and data transmission are independent of SL scheduling and transmission. If the UE needs to send uplink data and sidelink data, the UE needs to separately request resources from the gNB, separately receive resources indicated by different DCI, and then separately send information to the gNB and a sidelink receiving UE on the indicated resources. FIG. 7 is used as an example. If a transmit end UE supports both Uu interface transmission and SL transmission, the Uu interface transmission and the SL transmission are separated. When the transmit end UE needs to send uplink data through a Uu interface, the transmit end UE sends a scheduling request (scheduling request SR) to a base station, and the base station allocates, based on the SR, an uplink resource to the transmit end UE for uplink data transmission. When the transmit end UE needs to send SL data, the transmit end UE sends an SL-BSR to the base station, and the base station allocates, based on the SL-BSR, a resource to the transmit end UE for SL data transmission. Further, a receive end UE sends feedback information of the SL data to the transmit end UE, and then the transmit end UE sends the feedback information of the SL data to a network device. This relatively independent scheduling manner has high resource overheads, and an SL scheduling procedure is complex.

For the foregoing problem, in embodiments of this application, a new air interface transmission manner is proposed, which unifies communication between the terminal and the base station and communication between the terminals. The new air interface transmission manner can be given any name. Based on the air interface transmission manner, the terminal devices may directly communicate with each other, implementing a function similar to that of a sidelink (sidelink, SL), and the terminal device and the network device may also directly communicate with each other, implementing a function similar to that of a Uu interface. In this way, time-frequency resources can be saved, and complexity of a scheduling procedure can be reduced.

Uu and PC5 node air interfaces can be unified by unifying existing Uu and PC5 architectures, to implement joint transmission of Uu and PC5. Improvements in embodiments of this application are classified into the following three aspects, where a first terminal device is a transmit end, and a second terminal device is a receive end.
- Control signaling unification (integration): Unified control signaling may be received by the receive end device and the transmit device end that are for inter-terminal transmission, or may be used to control both the receive end and the transmit end that are for inter-terminal transmission. Further, the unified control signaling may be used to schedule the following unified data.
- Data transmission unification: The unified data sent by the first terminal device may be received by the network device and the second terminal device, in other words, unification of inter-terminal transmission and uplink data transmission is performed. The unified data may be data transmitted between the terminals, or may be uplink data. Further, whether a target receive end of the unified data is the network device or the second terminal device may be indicated by using information.
- Feedback information unification: Feedback information of data between the terminals may be directly fed back by the second terminal device to the network device. Further, the feedback information of the data between the terminals and feedback information that is of downlink data and that is received by the second terminal device may be fed back to the network device together.

According to the foregoing three aspects, air interface transmission complexity can be reduced from different perspectives, thereby improving communication efficiency.

The following further describes a communication method and a communication apparatus provided in embodiments of this application.

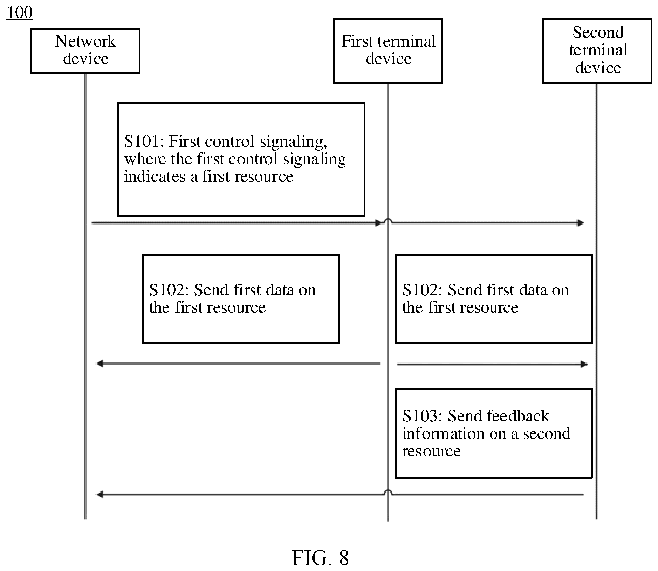

An embodiment of this application provides a communication method, to save time-frequency resources. FIG. 8 is a flowchart of a communication method 100. In the following descriptions, an example in which the method is applied to the diagram of the access network architecture shown in FIG. 1 is used. For ease of description, the following uses an example in which the method is performed by a network device, a first terminal, and a second terminal device. The network device described below may be the access network device in the network architecture shown in FIG. 1, and the terminal device described below may be the terminal device in the network architecture shown in FIG. 1.

S101: The network device sends first control signaling to the first terminal device and the second terminal device, and correspondingly, the first terminal device and the second terminal device receive the first control signaling from the network device. The first control signaling indicates a first resource.

Optionally, the first control signaling indicates the first terminal device to send first data on the first resource, and indicates the second terminal device to receive the first data on the first resource. Alternatively, the first control signaling indicates the first terminal device to send first data on the first resource, indicates the second terminal device to receive the first data on the first resource, and indicates the second terminal device to send feedback information of the first data on a second resource.

The first control signaling may be DCI. Optionally, the first control signaling may be a new DCI type or format. Further, the first control signaling carries a first identifier (or information). The first identifier (or the information) indicates that a signaling type or a signaling format of the first control signaling is a signaling type or a signaling format provided in S101 of this application. Alternatively, after receiving the first control signaling, the first terminal device or the second terminal device may determine, based on the first identifier (or the information), that the first control signaling indicates the first terminal device to send the first data on the first resource, and indicates the second terminal device to receive the first data on the first resource; or determine that the first control signaling indicates the first terminal device to send the first data on the first resource, indicates the second terminal device to receive the first data on the first resource, and indicates the second terminal device to send the feedback information of the first data on the second resource. For example, the first control signaling may be signaling obtained by unifying DCI format 0 and DCI format 3, and completes functions of the DCI format 0 and the DCI format 3.

Optionally, the first control signaling may be decoded by the first terminal device and the second terminal device. In a possible implementation, the network device encodes the first control signaling based on an identifier of the first terminal device and/or an identifier of the second terminal device, and correspondingly, a receive end may perform decoding based on the identifier of the first terminal device and/or the identifier of the second terminal device. In another possible implementation, the network device encodes the first control signaling based on a common identifier of the first terminal device and the second terminal device, and correspondingly, a receive end may perform decoding based on the common identifier. For example, the common identifier may be a group identifier of the first terminal device and the second terminal device, or a transmission pair identifier of the first terminal device and the second terminal device.

The first control signaling indicates the first resource. Further, the first control signaling may include a frequency domain resource indication and/or a time domain resource indication of the first resource.

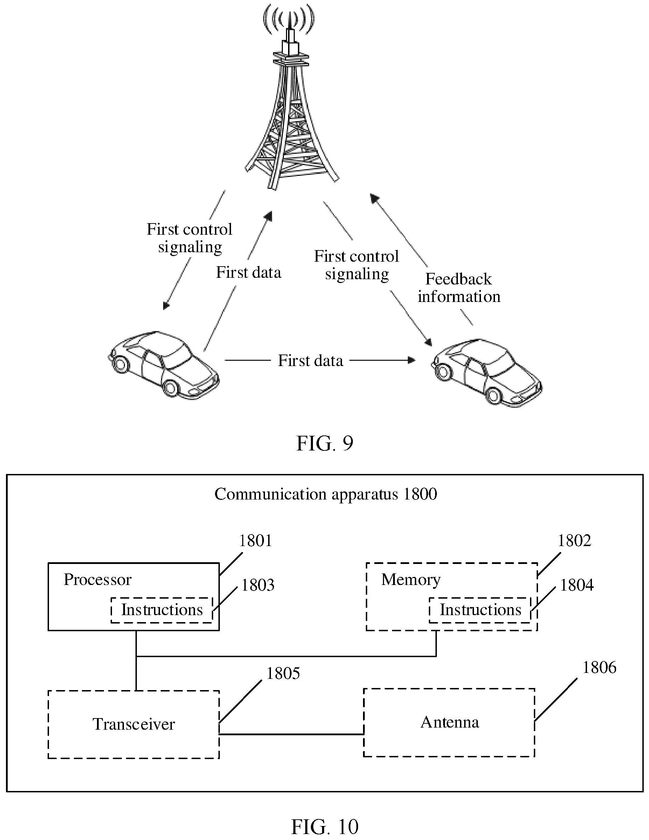

It may be understood that, as shown in FIG. 9, the first signaling sent by the network device may be received by the first terminal device and the second terminal device, and then decoded. Therefore, both the first terminal device and the second terminal device may obtain control information in the first terminal device, to send and receive data or send feedback information based on the control information. In this way, the network device can complete related scheduling on the first terminal device and the second terminal device by sending one piece of control signaling, thereby saving signaling resources.

S102: The first terminal device sends the first data to the second terminal device and the network device on the first resource, and correspondingly, the second terminal device and the network device receive the first data from the first terminal device on the first resource.

Receiving or sending data on the first resource may be receiving or sending data on all or a part of the first resource. The first resource may be a resource that is allocated by the network device by using the first signaling and that is used to carry the first data.

Optionally, there is a target receive end of the first data. The target receive end may be the second terminal device or the network device.

In an optional manner, the first data includes first information, and the first information indicates that the target receive end of the first data is the second terminal device and/or the network device. For example, the first information may be an identifier in a MAC CE. After decoding the first data, the network device and the second terminal device determine, based on the first information, whether the network device and the second terminal device are target receive ends of the first data.

In another optional manner, the first control signaling further indicates second information, and the second information indicates that the target receive end of the first data is the second terminal device and/or the network device. For example, the second information may be a field in the first control signaling, or may reuse some values of a field in the first control signaling. For example, the second information may be an identifier of the network device, an identifier of the second terminal device, an identifier of a user pair of the second terminal device and the first terminal device, or an identifier of a group to which the second terminal device and the first terminal device belong. In a possible manner, the second information may alternatively be an identifier of the first terminal device, and the second terminal device determines a transmit end of the first data based on the second information, to determine whether the second terminal device is the target receive end of the first data. The network device includes the second information in the sent first control signaling. Therefore, the target receive end of the first data has been indicated. After decoding the first control signaling, the second terminal device determines, based on the second information, whether the second terminal device is the target receive end of the first data.

After receiving the first data from the first terminal device, both the second terminal device and the network device may decode the first data. It may be understood that, as shown in FIG. 9, the first data sent by the first terminal device may be received by the network device and the second terminal device, and the first data may be decoded. Both the receive ends can obtain the first data. In comparison with receiving the first data by one receive end, one more piece of data may be used as a backup, thereby improving data transmission reliability. In addition, the method does not increase occupation of time-frequency resources, and therefore saves time-frequency resources.

After the second terminal device and the network device receive the first data from the first terminal device, only one receive end may decode the first data. If there is a target receive end of the first data, in an example, after receiving the first data, the target receive end of the first data decodes the first data, and a non-target receive end does not decode the first data.

Alternatively, step S102 may be: The first terminal device sends the first data to the second terminal device on the first resource, and correspondingly, the second terminal device receives the first data from the first terminal device on the first resource.

S103: The second terminal device sends feedback information to the network device on the second resource. S103 is an optional step, and may be specifically implemented in the following four manners.

Manner 1: The first control signaling further indicates the second resource. The second terminal device sends the feedback information of the first data to the network device on the second resource, and correspondingly, the network device receives the feedback information of the first data from the second terminal device.

Manner 2: The first control signaling further indicates the second resource. Before step S103, step S104 is that the network device sends second data to the second terminal device, and correspondingly, the second terminal device receives the second data from the network device. The second terminal device sends the feedback information of the first data and feedback information of the second data to the network device on the second resource.

Manner 3: Before step S103, step S104 is that the network device sends second control signaling to the second terminal device, and correspondingly, the second terminal device receives the second control signaling from the network device, where the second control signaling indicates the second resource. The second terminal device sends the feedback information of the first data to the network device on the second resource.

Manner 4: Before step S103, step S104 is that the network device sends second control signaling to the second terminal device, and correspondingly, the second terminal device receives the second control signaling from the network device, where the second control signaling indicates the second resource. S105 is that the network device sends second data to the second terminal device, and correspondingly, the second terminal device receives the second data from the network device. The second terminal device sends the feedback information of the first data and feedback information of the second data to the network device on the second resource.

Step S104 or S105 is signaling interaction or data transmission between the network device and the second terminal device, and steps S101 and S102 are data scheduling and transmission between the first terminal device and the second terminal device. Therefore, a sequence of step S104 and steps S101 and S102 is not limited.

That the first control signaling further indicates the second resource may be that the first control signaling includes indication information of the second resource, for example, frequency domain resource information or time domain resource information. That the second control signaling indicates the second resource may be that the second control signaling includes indication information of the second resource, for example, frequency domain resource information or time domain resource information. The second resource may be referred to as a feedback resource, a data feedback resource, or a HARQ resource.

The second control signaling may be downlink scheduling signaling or uplink scheduling signaling. The second control signaling may be DCI. When the second control signaling is downlink scheduling signaling, the second control signaling may be used to schedule the second data. Correspondingly, the second terminal device receives the second data based on the second control signaling. For example, the second control signaling is DCI format 1, and includes information about a time-frequency resource carrying the second data, and parameter information. The second terminal device may receive the second data based on the time-frequency resource information of the second data.

If a HARQ feedback is supported, the network device needs to learn of a receiving status of receiving the first data by the second terminal device, that is, needs to receive the feedback information of the first data, to perform resource allocation and retransmission scheduling. It may be understood that, as shown in FIG. 9, the second terminal device may directly send the feedback information of the first data to the network device, without sending the feedback information of the first data to the first terminal device and then sending the feedback information of the first data to the network device by the first terminal device. Therefore, time-frequency resources are saved. In Manner 1 and Manner 3, the second terminal device may further send the feedback information of the second data and the feedback information of the first data together to the network device, so that SL feedback and downlink data feedback are unified, thereby saving the time-frequency resources.

The second resource may be indicated by the first control signaling or the second control signaling. If the first control signaling indicates time-frequency resource information of the second resource, the second control signaling does not need to indicate a time-frequency resource for feedback; or if the first control signaling does not indicate or schedule information for feedback, the first data and the second data are fed back based on time-frequency resource information that is of the second resource and that is indicated by the second control signaling.

When the network device schedules the first data and the second data simultaneously, or when the second terminal device receives the first data and the second data simultaneously, the network device schedules, by using the first control signaling or the second control signaling, the second terminal device to perform unified feedback on the first data and the second data. For example, if the network device schedules transmission of the first data and the second data in first duration, the network device indicates, by using the first control signaling or the second control signaling, the second terminal device to perform unified feedback. For another example, the network device schedules transmission of the first data and the second data, and if the second terminal device needs to perform feedback on the first data and the second data in first duration, the network device indicates, by using the first control signaling or the second control signaling, the second terminal device to perform unified feedback.

If the network device schedules transmission of only the first data or the second data in first duration, the network device indicates, by using the first control signaling, the second terminal device to perform feedback on the first data, or the network device indicates, by using the second control signaling, the second terminal device to perform feedback on the second data. When the network device schedules transmission of the first data or the second data, if the second terminal device performs feedback only on the first data or the second data in the first duration, the network device indicates, by using the first control signaling, the second terminal device to perform feedback on the first data, or the network device indicates, by using the second control signaling, the second terminal device to perform feedback on the second data.

Optionally, if the second terminal device is the target receive end of the first data, the second terminal device sends the feedback information of the first data to the network device. If the second terminal device is not the target receive end of the first data, the second terminal device does not send the feedback information of the first data to the network device.

In this way, the second terminal device may determine the target receive end of the first data based on the information, to determine whether the feedback information needs to be sent, thereby saving signaling resources.

Alternatively, step S103 may be: The second terminal device sends the feedback information of the first data to the first terminal device on the second resource, and correspondingly, the first terminal device receives the feedback information of the first data, where the second resource is indicated by the first control signaling. Further, the first terminal device may send the feedback information of the first data to the network device.

Based on the foregoing alternative S103, if the second terminal device is the target receive end of the first data, the second terminal device sends the feedback information of the first data to the first terminal device. If the second terminal device is not the target receive end of the first data, the second terminal device does not send the feedback information of the first data to the first terminal device.

S106: If the feedback information of the first data is that the first data fails to be received, a network may schedule retransmission of the first data. S106 is an optional step, and may specifically include the following two cases.

Case 1: The network device may send control information to the first terminal device, to schedule the first terminal device to retransmit the first data to the second terminal device. Further, the first terminal device retransmits the first data to the second terminal device.

Case 2: If the network device receives and decodes the first data in S102, the network device may directly send control information to the second terminal device, to schedule retransmission of the first data. Further, the network device retransmits the first data to the second terminal device.

Retransmission of the first data may also be understood as retransmission of sending the first data, or resending the first data.

It may be understood that the data transmission unification and/or the feedback information unification may alternatively be used as an independent embodiment. When the data transmission unification and/or the feedback information unification are/is used as an independent embodiment, an implementation of the first control signaling is not limited. In a possible implementation, S101 may be replaced with that the network device sends third control signaling to the first terminal device, and correspondingly, the first terminal device receives the third control signaling from the network device. Further, the first terminal device sends the first control signaling to the second terminal device, and correspondingly, the second terminal device receives the first control signaling from the first terminal device. The first control signaling indicates the first resource.

In the replaced S101, the third control signaling is used by the network device to configure, for the first terminal device, a resource that can be used for data transmission between the first terminal device and the second terminal device. For example, the third control signaling indicates a third resource. The third control signaling may be DCI. Further, the third control signaling may be DCI format 3. In the replaced S101, that the first control signaling indicates the first resource may be that the first control signaling includes a frequency domain resource indication and/or a time domain resource indication of the first resource. Further, the first resource is in the third resource. The first control signaling may be sidelink control information (sidelink control information, SCI), or may be control information transmitted between the first terminal device and the second terminal device.

The replaced S101 may also be used as a new embodiment with reference to content described in S102, S103, and S106. For details, refer to the foregoing content, and details are not described herein again.

In S102, the first terminal device sends the first data to the second terminal device and the network device on the first resource, and correspondingly, the second terminal device and the network device receive the first data from the first terminal device on the first resource. Alternatively, step S102 may be replaced with: The first terminal device sends the first data to the second terminal device on the first resource, and correspondingly, the second terminal device receives the first data from the first terminal device on the first resource.

In S103, the second terminal device sends the feedback information to the network device on the second resource. S103 is an optional step. Specifically, there may be four implementations. Refer to the foregoing Manner 1 to Manner 4. In a manner in which the first control signaling indicates the second resource, the second resource is indicated by the network device to the first terminal device, that is, the third control signaling indicates the second resource. For example, the second resource is indicated by second resource-related information carried in the first control signaling (such as the SCI) sent by the first terminal device to the second terminal device. Further, the second resource is indicated by second resource-related information carried in the third control signaling sent by the network device to the first terminal device. It may be understood that the second resource-related information carried in the first control signaling and the second resource-related information carried in the third control signaling may be different, but indicate a same second resource. In S103, the second resource is used by the second terminal device to send the feedback information of the first data to a base station, and the feedback information indicates whether the second terminal device correctly or successfully receives the first data from the first terminal device.

FIG. 10 is a diagram of a structure of another communication apparatus. The communication apparatus 1800 may be the terminal device or the network device in the foregoing method embodiments, or may be a chip, a chip system, a processor, or the like that supports the terminal device or the network device in implementing the foregoing method. The communication apparatus may be configured to implement the method described in the foregoing method embodiments. For details, refer to the descriptions in the foregoing method embodiments.

The communication apparatus 1800 may include one or more processors 1801. The processor 1801 may be a general-purpose processor, a dedicated processor, or the like. For example, the processor 1801 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1800 may include one or more memories 1802. The memory may store instructions 1804, and the instructions may be run on the processor 1801, to cause the communication apparatus 1800 to perform the method described in the foregoing method embodiments. Optionally, the memory 1802 may further store data. The processor 1801 and the memory 1802 may be disposed separately, or may be integrated together.

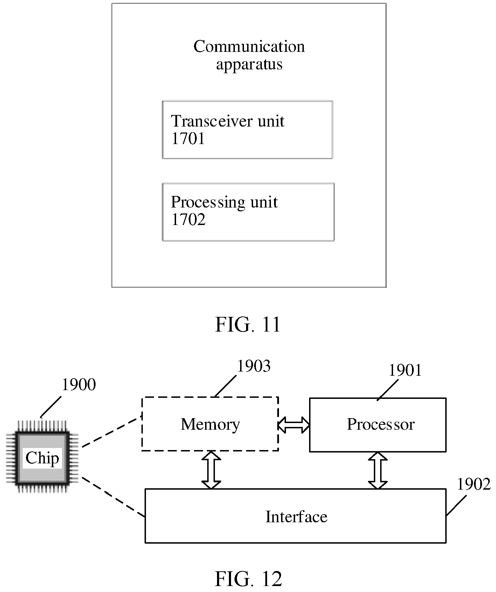

Optionally, the communication apparatus 1800 may further include a transceiver 1805 and an antenna 1806. The transceiver 1805 may be referred to as a transceiver unit, a transceiver machine, a transceiver circuit, or the like, and is configured to implement a transceiver function. The transceiver 1805 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function. A processing unit 1702 shown in FIG. 11 may be the processor 1801. A transceiver unit 1701 may be the transceiver 1805.

When the communication apparatus is applied to the first terminal device, the second terminal device, or the network device,
the transceiver 1805 or the transceiver unit 1701 may complete the receiving or sending action in the foregoing embodiments; and the processor 1801 or the processing unit 1702 may complete the determining or generation action in the foregoing embodiments.

In another possible design, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1801 may store instructions 1803. When the instructions 1803 are run on the processor 1801, the communication apparatus 1800 may be caused to perform the method described in the foregoing method embodiments. The instructions 1803 may be fixed in the processor 1801. In this case, the processor 1801 may be implemented by hardware.

In still another possible design, the communication apparatus 1800 may include a circuit. The circuit may implement a sending, receiving, or communication function of the communication device or the first terminal device in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type Metal-oxide-semiconductor (N-type Metal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiment may be the terminal device or the network device. However, a scope of the communication apparatus described in embodiments of this application is not limited thereto, and a structure of the communication apparatus may not be limited to FIG. 10. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 12. The chip 1900 shown in FIG. 12 includes a processor 1901 and an interface 1902. Optionally, the chip 1900 may further include a memory 1903. There may be one or more processors 1901, and there may be a plurality of interfaces 1902.

When the chip is configured to implement functions of the network device or the terminal device in embodiments of this application,
the interface 1902 is configured to receive or output a signal; and
the processor 1901 is configured to perform a data processing operation of the network device or the terminal device.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium. The storage medium stores a computer program or instructions. When the computer program or the instructions are executed by a communication device, a function in any one of the foregoing method embodiments is implemented.

This application further provides a computer program product including instructions. When a computer reads and executes the computer program product, the computer is caused to implement a function in any one of the foregoing method embodiments.

This application further provides a communication system. The communication system includes a first communication apparatus and a second communication apparatus. The first communication apparatus is configured to implement a function of the first terminal device in any one of the foregoing method embodiments, and the second communication apparatus is configured to implement a function of the second terminal device in any one of the foregoing method embodiments.

In an optional manner, the communication system further includes a third communication apparatus, and the third communication apparatus is configured to implement a function of the network device in any one of the foregoing method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal device or an apparatus in a first terminal device, wherein the method comprises:
receiving first control signaling from a network device, wherein the first control signaling indicates a first resource; and
sending first data to a second terminal device and the network device on the first resource.

2. The method according to claim 1, wherein
the first control signaling further indicates a second resource, wherein the second resource is used to carry feedback information of the first data, or the second resource is used to carry feedback information of the first data and feedback information of second data, and the second data is data sent by the network device to the second terminal device.

3. The method according to claim 2, wherein
the feedback information of the first data is sent by the second terminal device to the network device.

4. The method according to any one of claims 1 to 3, wherein
the first data comprises first information, and the first information indicates that a target receive end of the first data is the second terminal device and/or the network device.

5. The method according to any one of claims 1 to 3, wherein
the first control signaling further indicates second information, and the second information indicates that a target receive end of the first data is the second terminal device and/or the network device.

6. The method according to any one of claims 1 to 5, comprising:
retransmitting the first data to the second terminal device.

7. A communication method, applied to a second terminal device or an apparatus in a second terminal device, wherein the method comprises:
receiving first control signaling from a network device, wherein the first control signaling indicates a first resource; and
receiving first data from a first terminal device on the first resource.

8. The method according to claim 7, wherein
the first control signaling further indicates a second resource, and the method further comprises:
sending feedback information of the first data to the network device on the second resource.

9. The method according to claim 7, wherein
the first control signaling further indicates a second resource, and the method further comprises:
receiving second data from the network device; and
sending feedback information of the first data and feedback information of the second data to the network device on the second resource.

10. The method according to claim 7, wherein the method further comprises:
receiving second control signaling from the network device, wherein the second control signaling indicates a second resource;
receiving second data from the network device; and
sending feedback information of the first data or feedback information of the first data and feedback information of the second data to the network device on the second resource.

11. The method according to any one of claims 7 to 10, wherein
the first data comprises first information, and the first information indicates that a target receive end of the first data is the second terminal device and/or the network device.

12. The method according to any one of claims 7 to 10, wherein
the first control signaling further indicates second information, and the second information indicates that a target receive end of the first data is the second terminal device and/or the network device.

13. The method according to any one of claims 10 to 12, comprising:
if the second terminal device is the target receive end of the first data, sending the feedback information of the first data to the network device.

14. The method according to any one of claims 7 to 13, comprising:
receiving the first data retransmitted by the network device, or receiving the first data retransmitted by the first terminal device.

15. The method according to any one of claims 7 to 14, wherein
the first resource is used by the first terminal device to send the first data to the second terminal device and the network device.

16. A communication method, applied to a network device or an apparatus in a network device, wherein the method comprises:
sending first control signaling to a first terminal device and a second terminal device, wherein the first control signaling indicates a first resource, and the first resource is used by the first terminal device to send first data to the second terminal device and the network device; and
receiving the first data from the first terminal device on the first resource.

17. The method according to claim 16, wherein
the first control signaling further indicates a second resource, and the method further comprises:
receiving feedback information of the first data from the second terminal device on the second resource.

18. The method according to claim 16, wherein
the first control signaling further indicates a second resource, and the method further comprises:
sending second data to the second terminal device; and
receiving feedback information of the first data and feedback information of the second data from the second terminal device on the second resource.

19. The method according to claim 16, wherein the method further comprises:
sending second control signaling to the second terminal device, wherein the second control signaling indicates a second resource;
sending second data to the second terminal device; and
receiving feedback information of the first data or feedback information of the first data and feedback information of the second data from the second terminal device on the second resource.

20. The method according to any one of claims 16 to 19, wherein
the first data comprises first information, and the first information indicates that a target receive end of the first data is the second terminal device and/or the network device.

21. The method according to any one of claims 16 to 19, wherein
the first control signaling further indicates second information, and the second information indicates that a target receive end of the first data is the second terminal device and/or the network device.

22. The method according to any one of claims 16 to 21, comprising: retransmitting the first data to the second terminal device, or scheduling the first terminal device to retransmit the first data to the second terminal device.

23. A communication apparatus, comprising a module or a unit for performing the method according to any one of claims 1 to 6, or comprising a module or a unit for performing the method according to any one of claims 7 to 15, or comprising a module or a unit for performing the method according to any one of claims 16 to 22.

24. A communication apparatus, wherein the communication apparatus comprises a processor, and the processor is configured to run a computer program or instructions, to cause the communication apparatus to perform the method according to any one of claims 1 to 6, or cause the communication apparatus to perform the method according to any one of claims 7 to 15, or cause the communication apparatus to perform the method according to any one of claims 16 to 22.

25. A computer-readable storage medium, wherein the computer-readable storage medium stores computer instructions or a program, and when the computer instructions or the program is run on a communication apparatus, the method according to any one of claims 1 to 6 is performed, or the method according to any one of claims 7 to 15 is performed, or the method according to any one of claims 16 to 22 is performed.

26. A computer program product, wherein the computer program product comprises computer instructions; and when a part or all of the computer instructions are run on a communication apparatus, the method according to any one of claims 1 to 6 is performed, or the method according to any one of claims 7 to 15 is performed, or the method according to any one of claims 16 to 22 is performed.

27. A communication system, comprising a first communication apparatus and a second communication apparatus, wherein the first communication apparatus is configured to perform the method according to any one of claims 1 to 6, and the second communication apparatus is configured to perform the method according to any one of claims 7 to 15.

28. The communication system according to claim 27, wherein the communication system further comprises a third communication apparatus, and the third communication apparatus is configured to perform the method according to any one of claims 16 to 22.
